# EUROPÄISCHE PATENTSCHRIFT

(11) **EP 2 792 927 B1**
(45) Veröffentlichungstag und Bekanntmachung des Hinweises auf die Patenterteilung: **01.03.2017**
(21) Anmeldenummer: 14150011.6
(22) Anmeldetag: 02.01.2014
(51) Int. Cl.: F16P 1/02, B65C 9/00, B67C 3/00

(54) **Behandlungsmaschine für Behälter**
Handling machine for containers
Machine de traitement pour récipients

(30) Priorität: 15.04.2013 DE 102013206679
(43) Veröffentlichungstag der Anmeldung: 22.10.2014
(73) Patentinhaber: Krones AG, 93073 Neutraubling (DE)
(72) Erfinder: Eichhammer, Tobias, 93073 Neutraubling (DE); Hafner, Dieter, 93073 Neutraubling (DE)
(74) Vertreter: Grünecker Patent- und Rechtsanwälte PartG mbB

(56) Entgegenhaltungen:
- WO-A1-2010/099822
- WO-A1-2013/001551
- GB-A- 191 226 910

## Beschreibung

Die Erfindung betrifft eine Behandlungsmaschine für Behälter, insbesondere Flaschen, nach dem Oberbegriff des Anspruchs 1 und wie bekannt aus WO 2010/099822 A1 und WO 2013/001551 A1.

Behandlungsmaschinen mit rotierenden Behältertischen sind während des Betriebs bekanntermaßen durch eine seitliche Hebeschutzverkleidung abgeschirmt, um einen manuellen Zugriff auf die schnell rotierenden Behälterstationen zu verhindern. Bei bekannten Behandlungsmaschinen besteht die Hebeschutzverkleidung in der Regel aus planen Scheiben und hat in der Draufsicht eine im Wesentlichen polygonale Form. Die Scheiben sind dann an den vertikalen Kanten des Polygons in stationären Schienen oder dergleichen geführt und können darin nach oben geschoben werden, um einen seitlichen Zugriff auf den Behältertisch zur Reinigung, Umrüstung oder dergleichen Instandhaltungsmaßnahmen zu ermöglichen. Die Führungsschienen erstrecken sich dann von einem verdrehfesten Gestell oberhalb des Behältertisches durchgehend bis zu einem verdrehfesten Untergestell der Behandlungsmaschine. Diese stationären Komponenten des Hebeschutzes schränken den seitlichen Zugriff auf den Behältertisch jedoch auch bei angehobenem Hebeschutz ebenso ein wie die zum Andocken von Behandlungsaggregaten entlang des Maschinenumfangs möglichen Positionen.

Es wäre jedoch wünschenswert, bei angehobenem Hebeschutz einen ungehinderten Zugriff auf den Behältertisch über einen möglichst großen Maschinenwinkelbereich zu ermöglichen und/oder die Flexibilität hinsichtlich möglicher Andockpositionen für Behandlungsaggregate zu verbessern.

Die gestellte Aufgabe wird mit einer Behandlungsmaschine nach Anspruch 1 gelöst. Demnach umfasst diese: einen drehbaren Behältertisch; eine seitlich an dem Behältertisch ausgebildete Hebeschutzverkleidung; und eine oberhalb des Behältertisches stationär befestigte Schienenführung, an der die Hebeschutzverkleidung in vertikaler Richtung verschiebbar befestigt ist. Erfindungsgemäß umfasst die Hebeschutzverkleidung einen umfänglich verlaufenden Träger zur Befestigung an der Schienführung. Der Träger ist insbesondere für eine hängende Montage von Schutzscheiben ausgebildet. Die Hebeschutzverkleidung kann unterhalb des Trägers ohne stationäre Stützen ausgebildet werden. Dies vereinfacht den Zugriff auf den Behältertisch bei angehobener Hebeschutzverkleidung und das Andocken entlang des Maschinenumfangs. Die oberhalb des Behältertisches ausgebildete Schienenführung ermöglicht eine hängende Montage der Hebeschutzverkleidung an dem Träger. Der Träger hat beispielsweise einen im Wesentlichen rechteckigen Querschnitt. Entlang des Trägers sind beispielsweise Befestigungsnuten oder Befestigungsstege ausgebildet.

Erfindungsgemäß umfasst die Schienenführung nach unten frei überstehende Führungsschienen. Definitionsgemäß sind die frei stehenden Führungsschienen dann an ihren unteren Enden nicht mit einem stationären Gestell verbunden. Anders gesagt lassen sich mobile Befestigungselemente für die Hebeschutzverkleidung an den Führungsschienen dann über deren untersten Befestigungspunkt hinaus nach unten schieben. Dadurch, dass die Führungsschiene frei steht, lässt sich die Hebeschutzverkleidung an der Führungsschiene beispielsweise derart nach oben schieben, dass die Führungsschiene in einer angehobenen Position der Hebeschutzverkleidung nach unten nicht über die Hebeschutzverkleidung übersteht. Folglich ist die Zugänglichkeit des Behältertisches im Bereich direkt unter der Führungsschiene nicht durch diese eingeschränkt.

Vorzugsweise ist der Träger, und insbesondere der Umriss der Hebeschutzverkleidung insgesamt, in der Draufsicht als Kreisbogen, oder als Kreisringsegment, ausgebildet ist, der insbesondere einen Maschinenwinkel von wenigstens 180° einschließt. Im Gegensatz zu einem in der Draufsicht polygonal ausgebildeten Träger ermöglichen Kreisbögen eine flexible Anordnung von Schutzscheiben in frei wählbaren Maschinenwinkelpositionen. Die Hebeschutzverkleidung lässt sich daher in einem vergleichsweise großen Maschinenwinkelbereich an unterschiedliche Produktionsanforderungen, wie beispielsweise das Andocken unterschiedlicher Behandlungsaggregate, anpassen.

Vorzugsweise umfasst die Hebeschutzverkleidung nach unten über den Träger überstehende Schutzscheiben. Dadurch lassen sich an der Hebeschutzverkleidung auf flexible Weise Aussparungen für das Andocken von Behandlungsaggregaten ausbilden.

Vorzugsweise umfasst der Träger wenigstens ein umfänglich verlaufendes, insbesondere als Nut ausgebildetes Befestigungsprofil. Dies erleichtert die Montage von Befestigungselementen, wie beispielsweise Klammern, für Schutzscheiben. Insbesondere ein umfänglich durchgehend verlaufendes Befestigungsprofil ermöglicht eine Positionierung von Schutzscheiben und Befestigungselementen in frei wählbaren Abschnitten entlang des Trägers.

Eine besonders günstige Ausgestaltung der erfindungsgemäßen Behandlungsmaschine umfasst ferner Haltestangen mit einem ersten Ende, das zur hängenden Befestigung an dem Träger ausgebildet ist, und mit einem zweiten Ende, das zur Auflage von Schutzscheiben ausgebildet ist. Die Haltestangen ermöglichen eine modulare Konstruktion der Hebeschutzverkleidung bestehend aus mehreren umfänglichen Verkleidungssegmenten. Beispielsweise können in umfänglicher Richtung aneinander grenzende Schutzscheiben zwischen jeweils zwei Haltestangen befestigt werden. Die Schutzscheiben können beispielsweise kraftschlüssig und/oder formschlüssig mittels Klammern oder dergleichen an den Halterungen befestigt werden. Die Haltestangen ermöglichen ferner eine Stabilisierung der Hebeschutzverkleidung in radialer Richtung.

Vorzugsweise ist das Befestigungsprofil auf der Unterseite des Trägers ausgebildet, und die Haltestangen lassen sich an/in dem Befestigungsprofil von unten einhängen. Dies ermöglicht eine nachträgliche Anpassung der Hebeschutzverkleidung im montierten Zustand an der Behandlungsmaschine. Durch das Einsetzen oder Entfernen einzelner Haltestangen lässt sich die Segmentierung der Hebeschutzverkleidung entlang des Trägers auf einfache Weise verändern und an die jeweiligen Produktionsbedingungen anpassen. Beispielsweise können einzelne umfängliche Teilsegmente der Hebeschutzverkleidung an Stellen entfernt werden, an denen eine Andockstation für ein Behandlungsaggregat angebracht werden soll. An dieser Stelle ist dann gegebenenfalls keine Hebeschutzverkleidung nötig oder eine Aussparung vorhanden. Prinzipiell wäre ein Einhängen der Haltestangen von unten auch an einem seitlich an dem Träger ausgebildeten Befestigungsprofil denkbar.

Vorzugsweise umfasst die erfindungsgemäße Behandlungsmaschine ferner einen Klemmmechanismus zum Fixieren der Haltestangen an/in dem Befestigungsprofil, insbesondere umfassend Nutensteine, die in dem Befestigungsprofil geführt sind. Die Haltestangen lassen sich dann beispielsweise durch Einschrauben in die Nutensteine von unten fest klemmen. Mit Hilfe der in dem Befestigungsprofil verschiebbaren Nutensteine lassen sich die Haltestangen an frei wählbaren Winkelpositionen entlang des Befestigungsprofils fixieren.

Vorzugsweise ist wenigstens eine der Haltestangen teleskopartig mit veränderlicher Länge ausgebildet. Es lassen sich dann unterschiedlich hohe Schutzscheiben an dem teleskopartig verstellbaren Haltestangen befestigen. Beispielsweise könnte ein Bereich oberhalb eines anzudockenden Behandlungsaggregats durch entsprechendes Verkürzen der Haltestangen mit einer entsprechend niedrigeren Schutzscheibe ausgestattet werden. Es wäre ebenso denkbar, Haltestangen unterschiedlicher Länge vorzuhalten und einzelne Haltestangen je nach benötigtem Schutzbereich selektiv in das Befestigungsprofil einzusetzen.

Vorzugsweise umfasst die Hebeschutzverkleidung wenigstens eine Schutzscheibe, die in der Draufsicht als Kreisbogen, oder als Kreisringssegment, ausgebildet ist. Insbesondere im Zusammenwirken mit einem als Kreisbogen ausgebildeten Träger ist dann eine Positionierung von Schutzscheiben in frei wählbaren Winkelsegmenten entlang des Trägers möglich. Somit lässt sich die Hebeschutzverkleidung auf besonders flexible Weise an unterschiedliche anzudockende Behandlungsaggregate anpassen. Außerdem erleichtert der kreisbogenförmige Grundriss der Hebeschutzverkleidung ein Übereinanderschieben einzelner Schutzscheiben übereinander und/oder das Übereinanderschieben von Abdeckungen, Schutztüren oder dergleichen über Schutzscheiben, sowohl in vertikaler Richtung als auch in horizontaler Richtung entlang des Trägers. Es lassen sich somit auf einfache Weise Aussparungen für Behandlungsaggregate und/oder für einen selektiven Zugang zu bestimmte Maschinenwinkelsegmenten realisieren.

Vorzugsweise sind an der Hebeschutzverkleidung wenigstens eine Aussparung zum Andocken eines Behandlungsaggregats und ein über die Aussparung in vertikaler oder umfänglicher Richtung verschiebbare Abdeckung vorhanden. Die Abdeckung ermöglicht insbesondere ein Andocken und Abmontieren von Behandlungsaggregaten ohne Demontage einzelner Komponenten der Hebeschutzverkleidung. Für ein Verschieben in umfänglicher Richtung können beispielsweise an dem Träger und/oder zwischen einzelnen Haltestangen horizontal verlaufende Schienführungen dergleichen vorhanden sein. Ebenso können insbesondere an den Haltestangen vertikal verlaufende Schienenführungen für ein Öffnen/Schließen der Abdeckung in vertikaler Richtung vorhanden sein.

Bei einer günstigen Ausgestaltung der erfindungsgemäßen Behandlungsmaschine ist ferner wenigstens eine radial außerhalb des Behältertisches ausgebildete Auflageplatte zum Abstützen der Hebeschutzverkleidung in einer abgesenkten Betriebsstellung vorhanden. Damit kann die Stabilität der Hebeschutzverkleidung insbesondere bei Behandlungsmaschinen mit Durchmessern über einem Meter erhöht werden. Insbesondere die Bereiche neben der äußeren Abdeckplatte stehen dann zum flexiblen Andocken von Behandlungsaggregaten zur Verfügung. Da die Hebeschutzverkleidung überwiegend in der abgesenkten Betriebsstellung verwendet wird und die mechanischen Belastungen in erster Linie beim Produktionsbetrieb auftreten, ist ein Abstützen der Hebeschutzverkleidung in einer angehobenen Instandhaltungsstellung entbehrlich. Somit kann auch der konstruktive Aufwand für eine äußere Abstützung der Hebeschutzverkleidung bei Behandlungsmaschinen mit großen Behältertischdurchmessern minimiert werden.

Vorzugsweise umfasst die Behandlungsmaschine dann ferner eine feststehende Tischplatte, an der ein umfänglich verlaufendes Montageprofil zum Befestigen der Auflageplatte ausgebildet ist. Die Auflageplatte lässt sich dann auf einfache Weise an unterschiedlichen Maschinenwinkelpositionen befestigen. Besonders vorteilhaft ist hierbei ein umfänglich durchgehendes Montageprofil, sodass die Montageposition der Auflageplatte entlang des Montageprofils frei wählbar ist.

Vorzugsweise ist die erfindungsgemäße Behandlungsmaschine als Etikettiermaschine ausgebildet. Bei Etikettiermaschinen ist das flexible und modulare Konstruktionsprinzip der Schienenführung und Hebeschutzverkleidung besonders vorteilhaft, da dann Etikettieraggregate unterschiedlichen Typs und/oder in unterschiedlicher Anzahl verwendet werden können.

Eine bevorzugte Ausführungsform der erfindungsgemäßen Vorrichtung ist in der Zeichnung dargestellt. Es zeigen:
- Figur 1: eine Schrägansicht der erfindungsgemäßen Behandlungsmaschine mit angehobener Hebeschutzverkleidung;
- Figur 2: eine Schrägansicht einer erfindungsgemäßen Schienenführung und Hebeschutzverkleidung;
- Figur 3: eine Schrägansicht einer erfindungsgemäßen Hebeschutzverkleidung in modularer Bauweise;
- Figur 4: eine Schrägansicht der erfindungsgemäßen Behandlungsmaschine mit einer verschiebbaren Abdeckung für einen Aggregatausschnitt; und
- Figur 5: einen schematischen seitlichen Teilschnitt durch die erfindungsgemäße Behandlungsmaschine.

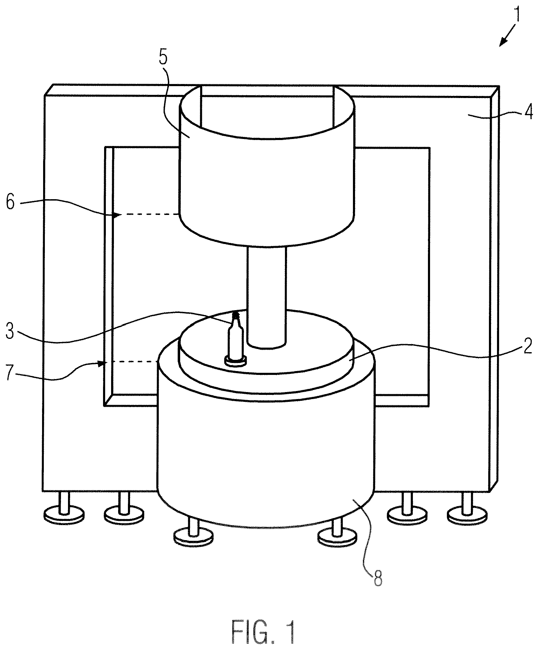

Wie die Figur 1 erkennen lässt, umfasst die erfindungsgemäße Behandlungsmaschine 1 in einer bevorzugten Ausführungsform einen drehbaren Behältertisch 2, an dem in an sich bekannter Weise umfänglich gleichmäßig verteilt Behandlungsstationen für Behälter 3 vorhanden sind. Oberhalb des Behältertisches 2 ist ein stationäres Gestell 4 vorhanden, an dem eine Hebeschutzverkleidung 5 in vertikaler Richtung verschiebbar befestigt ist. Die Hebeschutzverkleidung 5 ist in der Figur 1 in einer angehobenen Instandhaltungsstellung 6 gezeigt und befindet sich während des regulären Produktionsbetriebs in einer abgesenkten Betriebsstellung 7. Unterhalb der Hebeschutzverkleidung 5 ist eine Maschinenverkleidung 8 dargestellt. In der Betriebsstellung 7 ist die Hebeschutzverkleidung 5 vorzugsweise auf die Maschinenverkleidung 8 abgesenkt.

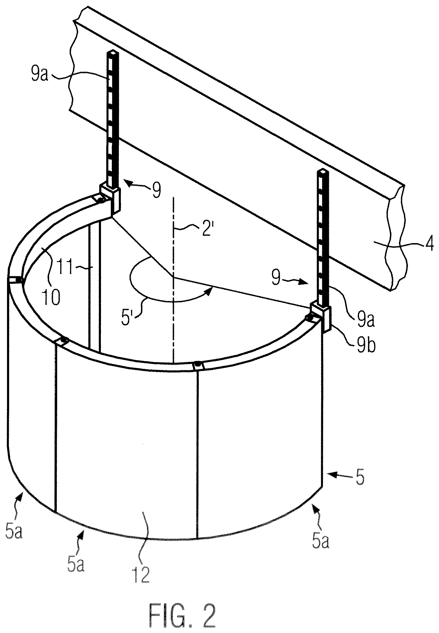

In der Figur 2 ist eine Schienenführung 9 für die Hebeschutzverkleidung 5 dargestellt. Demnach umfasst diese nach unten frei stehend an dem oberen Gestell 4 montierte stationäre Führungsschienen 9a und entlang der Führungsschienen 9a verschiebbare Befestigungselemente 9b, beispielsweise Schlitten oder dergleichen, zur Befestigung der Hebeschutzverkleidung 5. Letztere ist vorzugsweise modular aufgebaut bestehend aus einem umfänglich verlaufenden Träger 10, Haltestangen 11 und Schutzscheiben 12.

Die Hebeschutzverkleidung 5 ist in der Draufsicht als Kreisbogen oder Kreisringsegment ausgebildet, beispielsweise über einen auf die Drehachse 2' des Behältertisches 2 bezogenen Maschinenwinkelbereich 5' von wenigstens 180°. Vorzugsweise sind mehrere Schutzscheiben 12 als entlang des Umfangs aneinander grenzende Verkleidungssegmente 5a ausgebildet. Diese können beispielsweise an ihrer Unterkante von jeweils zwei Haltestangen 11 und an ihrer Oberkante von dem Träger 10 gehalten werden.

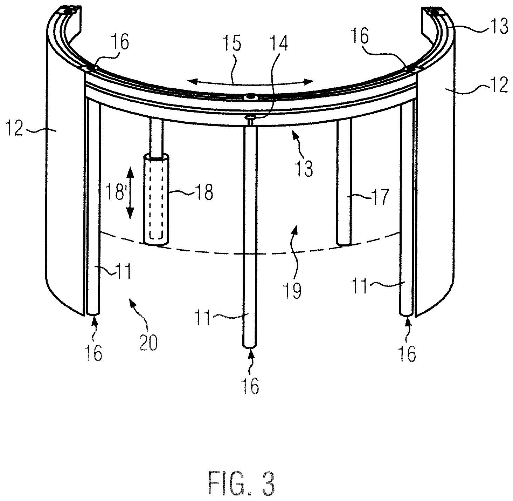

In der Figur 3 ist der modulare Aufbau der kreisbogenförmigen Hebeschutzverkleidung 5 zu erkennen. Demnach sind die Haltestangen 11 vorzugsweise in ein auf der Unterseite des Trägers 10 ausgebildetes Befestigungsprofil 13 eingehängt. Ein entsprechendes, als Nut ausgebildetes Befestigungsprofil 13 ist zur Veranschaulichung auch auf der Oberseite des Trägers 10 gezeigt. Die Befestigung der Haltestangen 11 erfolgt vorzugsweise mittels in das untere Befestigungsprofil 13 eingesetzter Nutensteine 14, die mit den Haltestangen 11, die beispielsweise einen runden Querschnitt aufweisen können, in an sich bekannter Weise verschraubt werden können. Durch das Einschrauben der Haltestangen 11 in die Nutensteine 14 lassen sich die Haltestangen 11 an in umfänglicher Richtung 15 frei wählbaren Positionen entlang des Trägers 10 festklemmen. Der Nutenstein 14 ist in der Figur 3 lediglich schematisch an einer gedachten Position innerhalb des Befestigungsprofils 13 angedeutet.

Zur Befestigung der Schutzscheiben 12 sind vorzugsweise Halteklammern 16 vorhanden, die beispielsweise mit in dem oberen Befestigungsprofil 13 geführten Nutensteinen (nicht gezeigt) verschraubt werden können und in entsprechender Weise mit der unteren Stirnfläche der Haltestangen 11 verschraubt werden können.

In der Figur 3 sind ferner verkürzte Haltestangen 17, 18 schematisch angedeutet, mit denen sich ein Bereich 19 der Hebeschutzverkleidung 5 oberhalb einer Aussparung 20, die beispielsweise als Aggregatausschnitt für ein anzudockendes Behandlungsaggregat (nicht gezeigt) dient, selektiv verkleiden lässt. Verkürzte Haltestangen lassen sich beispielsweise durch Vorhalten mit unterschiedlicher Länge vorgefertigter Haltestangen 17 realisieren und/oder mittels teleskopartig in ihrer Länge veränderlichen Haltestangen 18. Das Teleskopieren der Haltestangen 18 ist schematisch mit dem Doppelpfeil 18' angedeutet.

Der Träger 10 könnte auch aus mehreren in umfänglicher Richtung 15 aneinander montierten Bogensegmenten bestehen (nicht gezeigt), um bei Bedarf unterschiedliche Maschinenwinkelsegmente mit dem Träger 10 abdecken zu können. Das Befestigungsprofil 13 ist vorzugsweise in umfänglicher Richtung durchgehend ausgebildet, um die Befestigung von Haltestangen 11 und Schutzscheiben 12 in frei wählbaren Maschinenwinkelsegmenten, entlang des Trägers 10, zu ermöglichen. Die Haltestangen 11, 17, 18 lassen sich von unten in das Befestigungsprofil 13 einhängen und mittels einer entsprechenden Anzahl von Nutensteinen 14 festklemmen. Somit können die Haltestangen 11, 17, 18 ohne Abnehmen des Hebeschutzes 5 von der Schienenführung 9 eingesetzt und ausgebaut werden.

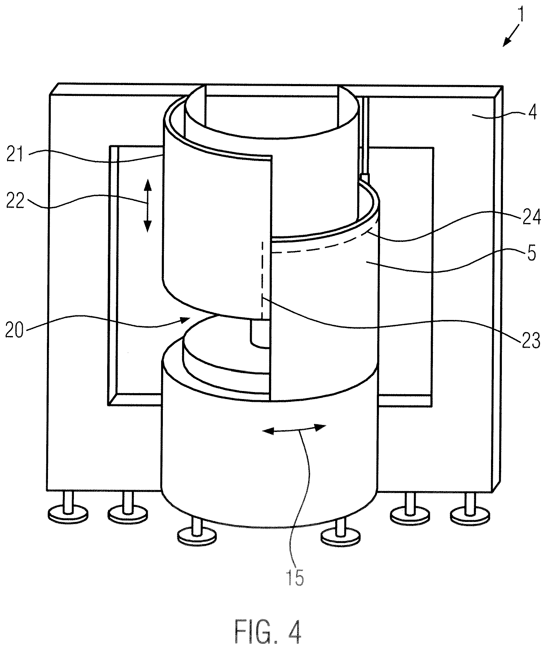

Die Figur 4 verdeutlicht eine verschiebbare Abdeckung 21 für die Aussparung 20. Gezeigt ist eine Variante, bei der die Abdeckung 21 in vertikaler Richtung 22 von oben über die Aussparung 20 geschoben werden kann. Zu diesem Zweck ist die Abdeckung 21 vorzugsweise auf der Außenseite der Hebeschutzverkleidung 5 mittels wenigstens einer lediglich schematisch angedeuteten ersten Schienenführung 23 vertikal verschiebbar gelagert. Alternativ ließe sich die Abdeckung 2 auch in horizontaler Richtung 15 entlang des Umfangs der Hebeschutzverkleidung 5 verschieben. Eine zu diesem Zweck geeignete zweite Schienenführung 24 ist ebenfalls schematisch angedeutet.

Mit Hilfe der frei stehenden Führungsschienen 9a lässt sich die Zugänglichkeit des Behältertisches 2 nach dem Anheben der Hebeschutzverkleidung 5 über einen großen Maschinenwinkelbereich der Behandlungsmaschine 1 gewährleisten. Die im Wesentlichen kreisbogenförmige Form der Hebeschutzverkleidung 5 in der Draufsicht ermöglicht eine flexible Anordnung von Schutzscheiben 12, Ausschnitten 20 und/oder verschiebbaren Abdeckungen 21 in vorzugsweise frei wählbaren Maschinenwinkelbereichen. Somit lassen sich Typ und Anzahl von anzudockenden Behandlungsaggregaten flexibel an unterschiedliche Produktionsanforderungen anpassen.

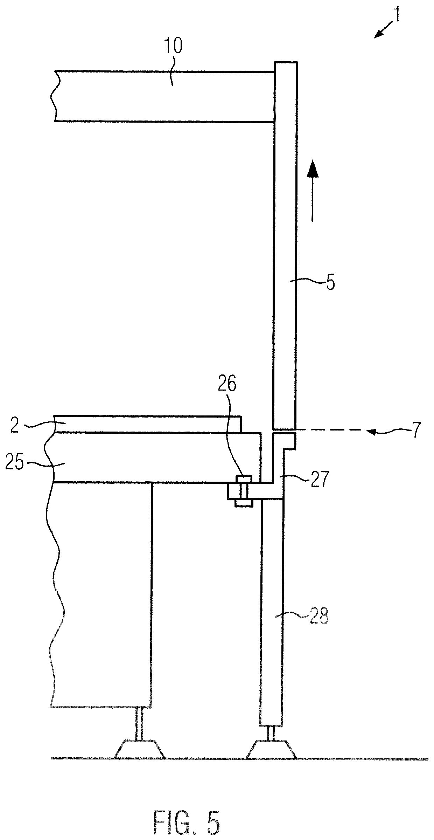

In der Figur 5 ist eine optionale Abstützung der Hebeschutzverkleidung 5 in ihrer abgesenkten Betriebsposition 7 schematisch gezeigt. Insbesondere bei Behältertischen 2 mit einem Durchmesser von wenigstens 1 m kann mit einer zusätzlichen, radial außerhalb des Behältertisches 2 vorhandenen Abstützung der Hebeschutzverkleidung 5 im Betrieb der Behandlungsmaschine 1 zusätzliche Stabilität erzielt werden. Zu diesem Zweck ist beispielsweise an einer stationären Tischplatte 25, beispielsweise unterhalb des Behältertisches 2, ein umfänglich verlaufendes Montageprofil 26 ausgebildet, an dem sich eine Auflageplatte 27 für die Hebeschutzverkleidung 5 festklemmen lässt. Zusätzlich könnte eine Stütze 28 zum Abstützen der Auflageplatte 27 auf dem Boden vorgesehen sein.

Da die Hebeschutzverkleidung 5 lediglich für ausgewählte Bedienschritte und/oder zur Instandhaltung von der Auflageplatte 27 angehoben werden muss, ist eine zusätzliche Abstützung der Hebeschutzverkleidung 5 in der angehobenen Instandhaltungsposition 6 in der Regel entbehrlich. Somit kann die Stabilität der Hebeschutzverkleidung 5 an der Behandlungsmaschine 1 auf Platz sparende Weise erhöht werden. Beispielsweise wird der Zugriff auf den Behältertisch 2 oberhalb der Auflageplatte 27 nicht beeinträchtigt.

Die Auflageplatte 27 lässt sich beispielsweise entlang des Montageprofils 26 verschieben, sodass sie nicht direkt unter Aussparungen 20 für Behandlungsaggregate angebracht werden muss und somit eine nahezu ungehinderte Befestigung von Behandlungsaggregaten an dem Behältertisch 2 beziehungsweise an der stationären Tischplatte 25 möglich ist. Je nach Bestückung der Behandlungsmaschine 1 mit Behandlungsaggregaten könnten mehrere Auflageplatten 27 entlang des Montageprofils 26 an geeigneten Maschinenwinkelpositionen, also an geeigneten Positionen entlang des Maschinenumfangs, angebracht sein, an denen sie das Andocken von Behandlungsaggregaten nicht oder nur unwesentlich einschränken.

Somit lässt sich mit der hängenden Befestigung der Hebeschutzverkleidung 5 an der oberen Schienführung 9, insbesondere mit einem in der Draufsicht kreisbogenförmigen Umriss der Hebeschutzverkleidung 5, ein besonders flexibles Maschinenkonzept verwirklichen, bei dem der Zugriff auf den Behältertisch 2 für die Bedienung und/oder Instandhaltung der Maschine gleichermaßen gewährleistet ist wie ein für unterschiedliche Behandlungssituationen angepasstes Andocken von Behandlungsaggregaten, wie beispielsweise Etikettieraggregaten. Hierbei lassen sich die beschriebenen Varianten der Hebeschutzverkleidung 5, insbesondere der hängenden Befestigung segmentierter Schutzscheiben 12, verschiebbaren Abdeckungen 21 und dergleichen beliebig mit der an der oberen Schienenführung 9 gelagerten Aufhängung des Trägers 10 kombinieren.

## Patentansprüche

1. Behandlungsmaschine für Behälter (3), insbesondere Flaschen, mit:
- einem drehbaren Behältertisch (2);
- einer seitlich an dem Behältertisch ausgebildeten Hebeschutzverkleidung (5); und
- einer oberhalb des Behältertisches stationär befestigten Schienenführung (9), an der die Hebeschutzverkleidung in vertikaler Richtung verschiebbar befestigt ist,
wobei die Hebeschutzverkleidung einen in umfänglicher Richtung (15) verlaufenden Träger (10) zur Befestigung an der Schienenführung umfasst,
**dadurch gekennzeichnet, dass** die Schienenführung (9) oberhalb des Behältertisches ausgebildet ist und nach unten frei überstehende Führungsschienen (9a) umfasst.

2. Behandlungsmaschine nach Anspruch 1, wobei der Träger (10) in der Draufsicht als Kreisbogen ausgebildet ist, der insbesondere einen Maschinenwinkel (5') von wenigstens 180° einschließt.

3. Behandlungsmaschine nach einem der vorigen Ansprüche, wobei die Hebeschutzverkleidung (5) nach unten über den Träger (10) überstehende Schutzscheiben (12) umfasst.

4. Behandlungsmaschine nach einem der vorigen Ansprüche, wobei der Träger (10) wenigstens ein umfänglich verlaufendes, insbesondere als Nut ausgebildetes Befestigungsprofil (13) umfasst.

5. Behandlungsmaschine nach einem der Ansprüche, ferner mit Haltestangen (11, 17, 18) mit einem ersten Ende, das zur hängenden Befestigung an dem Träger (10) ausgebildet ist, und mit einem zweiten Ende, das zur Auflage von Schutzscheiben (12) ausgebildet ist.

6. Behandlungsmaschine nach Anspruch 4 und 5, wobei das Befestigungsprofil (13) auf der Unterseite des Trägers (10) ausgebildet ist und sich die Haltestangen (11, 17, 18) an/in dem Befestigungsprofil von unten einhängen lassen.

7. Behandlungsmaschine nach Anspruch 6, ferner mit einem Klemmmechanismus zum Fixieren der Haltestangen (11, 17, 18) an/in dem Befestigungsprofil (13), insbesondere umfassend in dem Befestigungsprofil geführte Nutensteine (14).

8. Behandlungsmaschine nach einem der Ansprüche 5 bis 7, wobei wenigstens eine der Haltestangen (18) teleskopartig mit veränderlicher Länge ausgebildet ist.

9. Behandlungsmaschine nach einem der vorigen Ansprüche, wobei die Hebeschutzverkleidung (5) wenigstens eine Schutzscheibe (12) umfasst, die in der Draufsicht als Kreisbogen ausgebildet ist.

10. Behandlungsmaschine nach einem der vorigen Ansprüche, wobei an der Hebeschutzverkleidung (5) wenigstens eine Aussparung (20) zum Andocken eines Behandlungsaggregats und eine über die Aussparung in vertikaler (22) oder umfänglicher (15) Richtung verschiebbare Abdeckung (21) vorhanden sind.

11. Behandlungsmaschine nach einem der vorigen Ansprüche, ferner mit wenigstens einer radial außerhalb des Behältertisches (2) ausgebildeten Auflageplatte (27) zum Abstützen der Hebeschutzverkleidung (5) in einer abgesenkten Betriebsstellung (7).

12. Behandlungsmaschine nach Anspruch 11, ferner mit einer feststehenden Tischplatte (25), an dem ein umfänglich verlaufendes Montageprofil (26) zum Befestigen der Auflageplatte (27) ausgebildet ist.

13. Behandlungsmaschine nach wenigstens einem der vorigen Ansprüche, die als Etikettiermaschine ausgebildet ist.

## Claims

1. A treatment machine for containers (3), in particular bottles, comprising:
- a rotatable container table (2);
- a lift guard cover (5) formed laterally on the container table; and
- a rail guide (9), which is stationarily fixed in position above the container table and which has the lift guard cover secured thereto such that it is displaceable in a vertical direction,
wherein the lift guard cover comprises a carrier (10) for fastening to the rail guide, the carrier (10) extending in a circumferential direction (15),
**characterized in that**
the rail guide (9) is formed above the container table and comprises guide rails (9a) with downwardly projecting free ends.

2. The treatment machine according to claim 1, wherein the carrier (10) is configured as a circular arc when seen from above, said circular arc enclosing in particular a machine angle (5') of at least 180°.

3. The treatment machine according to one of the preceding claims, wherein the lift guard cover (5) comprises protection screens (12) projecting downwards beyond the carrier (10).

4. The treatment machine according to one of the preceding claims, wherein the carrier (10) comprises a circumferentially extending fastening profile (13), in particular a fastening profile (13) configured as a groove.

5. The treatment machine according to one of the preceding claims, further comprising holding rods (11, 17, 18) having a first end configured for suspended fastening to the carrier (10) and a second end configured for supporting protection screens (12) thereon.

6. The treatment machine according to claims 4 and 5, wherein the fastening profile (13) is formed on the lower surface of the carrier (10) and the holding rods (11, 17, 18) are adapted to be attached to the fastening profile from below.

7. The treatment machine according to claim 6, further comprising a clamping mechanism for fixing the holding rods (11, 17, 18) on/in the fastening profile (13), including in particular T-nuts (14) guided in the fastening profile.

8. The treatment machine according to one of the claims 5 to 7, wherein at least one of the holding rods (18) has a telescopic structural design and is variable in length.

9. The treatment machine according to one of the preceding claims, wherein the lift guard cover (5) comprises at least one protection screen (12) configured as a circular arc when seen from above.

10. The treatment machine according to one of the preceding claims, wherein the lift guard cover (5) is provided with at least one opening (20) for docking of a treatment unit and with a cover (21) which is displaceable to a position on top of the opening in a vertical (22) or a circumferential (15) direction.

11. The treatment machine according to one of the preceding claims, further comprising at least one support plate (27) formed radially outside the container table (2) and used for supporting the lift guard cover (5) at a lowered operating position (7).

12. The treatment machine according to claim 11, further comprising a stationary table top (25) having formed thereon a circumferentially extending mounting profile (26) for fixing the support plate (27).

13. The treatment machine according to at least one of the preceding claims, which is configured as a labeling machine.

## Revendications

1. Machine de traitement pour contenants (3), notamment des bouteilles, comprenant :
- une table de contenants (2) rotative ;
- un capotage de protection relevable (5) formé latéralement sur la table de contenants ; et
- un système de rail de guidage (9) fixé de manière stationnaire au-dessus de la table de contenants, et sur lequel est fixé de manière verticalement coulissante, le capotage de protection relevable,
le capotage de protection relevable comportant un support (10), qui s'étend dans la direction périphérique (15) et est destiné à être fixé au système de rail de guidage,
**caractérisée en ce que**
le système de rail de guidage (9) est formé au-dessus de la table de contenants et comporte des rails de guidage (9a) faisant saillie librement vers le bas.

2. Machine de traitement selon la revendication 1, dans laquelle le support (10) présente, en vue de dessus, une forme d'arc de cercle, et couvre notamment un angle-machine (5') d'au moins 180°.

3. Machine de traitement selon l'une des revendications précédentes, dans laquelle le capotage de protection relevable (5) comprend des vitres de protection (12) faisant saillie au-delà du support (10), vers le bas.

4. Machine de traitement selon l'une des revendications précédentes, dans laquelle le support (10) comprend au moins un profilé de fixation (13) s'étendant de manière périphérique, notamment un profilé de fixation réalisé sous forme de rainure.

5. Machine de traitement selon l'une des revendications, comprenant par ailleurs des tiges de maintien (11, 17, 18) présentant une première extrémité, qui est configurée pour la fixation suspendue au support (10), et une deuxième extrémité, qui est configurée pour l'appui de vitres de protection (12).

6. Machine de traitement selon la revendication 4 ou la revendication 5, dans laquelle le profilé de fixation (13) est formé sur le côté inférieur du support (10), et les tiges de maintien (11, 17, 18) peuvent s'accrocher par le bas sur/dans le profilé de fixation.

7. Machine de traitement selon la revendication 6, comprenant par ailleurs un mécanisme de serrage pour fixer les tiges de maintien (11, 17, 18) sur/dans le profilé de fixation (13), notamment des patins coulissants (14) guidés de manière enserrée dans le profilé de fixation.

8. Machine de traitement selon l'une des revendications 5 à 7, dans laquelle au moins l'une des tiges de maintien (18) est d'une configuration de longueur variable, du genre télescopique.

9. Machine de traitement selon l'une des revendications précédentes, dans laquelle le capotage de protection relevable (5) comprend au moins une vitre de protection (12), qui présente, en vue de dessus, une forme d'arc de cercle.

10. Machine de traitement selon l'une des revendications précédentes, dans laquelle sur le capotage de protection relevable (5) sont prévus au moins un évidement (20) pour l'amarrage d'un groupe de traitement, et un capotage de recouvrement (21) pouvant coulisser par-dessus l'évidement, dans la direction verticale (22) ou périphérique (15).

11. Machine de traitement selon l'une des revendications précédentes, comprenant par ailleurs une plaque d'appui (27), qui est formée radialement à l'extérieur de la table de contenants (2) et est destinée à l'appui du capotage de protection relevable (5) dans une position de service abaissée (7).

12. Machine de traitement selon la revendication 11, comprenant, par ailleurs un plateau de table (25) en position fixe, sur lequel est formé un profilé de montage (26) s'étendant de manière périphérique, pour la fixation de la plaque d'appui (27).

13. Machine de traitement selon l'une au moins des revendications précédentes, qui est réalisée en tant que machine d'étiquetage.
